(19)

**Europäisches Patentamt**
**European Patent Office**
**Office européen des brevets**

(11) **EP 4 195 104 A1**

(12) **EUROPEAN PATENT APPLICATION**

(43) Date of publication:
**14.06.2023 Bulletin 2023/24**

(21) Application number: **22204895.1**

(22) Date of filing: **01.11.2022**

(51) International Patent Classification (IPC):
**G06N 3/0464** (2023.01)  **G06N 3/082** (2023.01)
**G06N 3/084** (2023.01)  **G06N 3/045** (2023.01)

(52) Cooperative Patent Classification (CPC):
**G06N 3/082; G06N 3/045; G06N 3/0464;**
G06N 3/084

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.12.2021 US 202117544598**

(71) Applicant: **INTEL Corporation**
**Santa Clara, CA 95054 (US)**

(72) Inventors:
- **Miret, Santiago**
  **Oakland, 94612 (US)**
- **Chua, Vui Seng**
  **Hillsboro, 97124 (US)**
- **Phielipp, Mariano J.**
  **Mesa, 85202 (US)**
- **Jain, Nilesh**
  **Portland, 97229-9411 (US)**

(74) Representative: **Goddar, Heinz J.**
**Boehmert & Boehmert**
**Anwaltspartnerschaft mbB**
**Pettenkoferstrasse 22**
**80336 München (DE)**

(54) **SYSTEM AND METHOD FOR PRUNING FILTERS IN DEEP NEURAL NETWORKS**

(57) An apparatus is provided to compress DNNs using filter pruning on a per-group basis. For example, the apparatus accesses a trained DNN that includes a plurality of layers. The apparatus generates a sequential graph representation of the plurality of layers. The sequential graph representation includes a sequence of nodes. Each node is a graph representation of a layer. The apparatus clusters the layers into layer groups. A layer group includes one or more layers. The apparatus determines a pruning ratio for a layer group and prunes the filters of the layers in the layer group based on the pruning ratio. The apparatus may cluster the layers and determine the pruning ratio by using a GNN. The apparatus generates compressed layers from the layers in the layer group through the filter pruning process. The apparatus further updates the DNN by replacing the layers in the layer group with the compressed layers.

EP 4 195 104 A1

**Description**

Technical Field

This disclosure relates generally to deep neural networks (DNNs), and more specifically, to pruning filters in DNNs.

Background

A DNN takes in an input, assigns importance (learnable weights and biases) to various aspects/objects in the input, and generates an output. DNNs are used extensively for a variety of artificial intelligence applications ranging from computer vision to speech recognition and natural language processing. However, many DNNs are too big to fit in systems having limited computing resources, e.g., limited memory or limited processing power.

Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 illustrates an architecture of an example DNN, in accordance with various embodiments.
FIG. 2 illustrates a deep learning environment, in accordance with various embodiments.
FIG. 3 is a block diagram of a DNN system, in accordance with various embodiments.
FIG. 4 is a block diagram of a compression module, in accordance with various embodiments.
FIG. 5 illustrates a sequential graph representation of a DNN, in accordance with various embodiments.
FIG. 6 illustrates clustering layers of a DNN, in accordance with various embodiments.
FIG. 7 illustrates filter pruning performed on a convolutional layer of the DNN, in accordance with various embodiments.
FIG. 8 illustrates an example compressed DNN, in accordance with various embodiments.
FIG. 9 is a flowchart showing a method of pruning filters in a DNN, in accordance with various embodiments.
FIG. 10 is a block diagram of an example computing device, in accordance with various embodiments.

Detailed Description

*Overview*

Deep learning (DL) models are characterized by the ability to produce effective abstract representations of data using automatic latent feature extraction. To accomplish this, DNNs are substantially more complex compared to more traditional machine learning techniques and require many orders of magnitude more parameters to be trained. One focus in the DL space is transforming DNNs from large unwieldy, overparameterized models into more sustainable network designs. This effort is catalyzed by several factors, including: the desire to conserve memory and compute overhead for the deployment of commercial DL models, energy sustainability, the need for greater model interpretability, and the aspiration to port DL models to low compute environments, including edge and IOT devices. For instance, as datasets increase in size, networks also increase in complexity, number of layers and parameters in order to absorb the supervision. The increased size of the networks makes it increasingly difficult for the model to be deployed in low memory environments such as, mobile phones, IOT edge devices, etc. Also, networks of larger sizes are more expensive to run due to higher energy consumption. Various technologies have been considered for reducing the size of networks with limited loss of accuracy in the prediction, so that the model can fit in the memory of low resource systems.

Approaches for compressing DNN models include pruning, quantization, low-rank and sparse approximations, and knowledge distillation. For example, in one class of approaches, pruning of the weights of a trained DNN or pruning at the level of feature maps and filters is done to reduce the model size. Pruning is a process of sparsifying weights which connect neurons from two adjacent layers in the network. Sparsification of neural networks via effective structured pruning of the functional layers, such as filters in convolutional networks and groups of layers in transformer models, can yield significant compute acceleration for various neural network workloads. A major challenge in structured pruning is managing the various interactions between different layers and groups of layers of workloads with different architectures and parameters.

Many filter pruning methods rely on heuristic methods to determine which layers and groups of layers to prune and then apply various thresholds or other heuristics. Major disadvantages of the heuristic based approach include that the heuristic is often manually tuned, which is time intensive, and applied indiscriminately to every layer in the network without taking into other information.

Embodiments of the present invention relate to a DNN compressing method that uses a learnable framework and underlying structures of DNNs to prune filters. The DNN compressing method includes expressing the underlying workload of a DNN as a sequential graph representation, passing the sequential graph representation trough a trained graph neural network (GNN), which outputs group-wise pruning ratios, and pruning filters on a per-group basis based on the group-wise pruning ratios.

In an example, a sequence of graph representations is generated from a sequence of layers (e.g., hidden layers) in a DNN workload. Each graph representation represents a layer or activation that is generated based on attributes of the layer or activation. The graph representations are in an order that matches the order of the layers in the DNN workload. The GNN receives the sequence of graph representations and clusters the graph representations into groups through a learnable graph pooling process. The GNN may also receive an evaluation metric in addition to the sequence of graph representations. The evaluation metric includes a target accuracy of the DNN after filter pruning. As a graph representation corresponds to a layer, the layers in the DNN workload are also clustered. The GNN also determines a pruning ratio for each group. The pruning ratio is a number representing a percentage of filters to be pruned. The filters of the layers in the group are also clustered and pruned based on the pruning ratio. Compared with filter pruning on a per-layer level, the filter pruning on a per-group level is more efficient as the number of filter groups is reduced. Accordingly, the group of layers as a whole achieves the desired sparsity level. The DNN is updated with the compressed layers in the group. The updated DNN has a higher sparsity level and smaller size. The GNN can be further trained by the sequence of graph representations and the pruning ratio.

The present invention provides a learning framework that can be applied to a large variety of DNNs and provides an effective solution for group-wise filter pruning. The DNN compression method improves the efficiency of filter pruning.

For purposes of explanation, specific numbers, materials and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed, or described operations may be omitted in additional embodiments.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicate that different instances of like objects are being referred to, and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value based on the context of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the context of a particular value as described herein or as known in the art.

In addition, the terms "comprise," "comprising," "include," "including," "have," "having" or any other variation thereof, are intended to cover a non-exclusive inclusion. For example, a method, process, device, or system that comprises a list of elements is not necessarily limited to only those elements but may include other elements not expressly listed or inherent to such method, process, device, or system. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description below and the accompanying drawings.

*Example DNN Architecture*

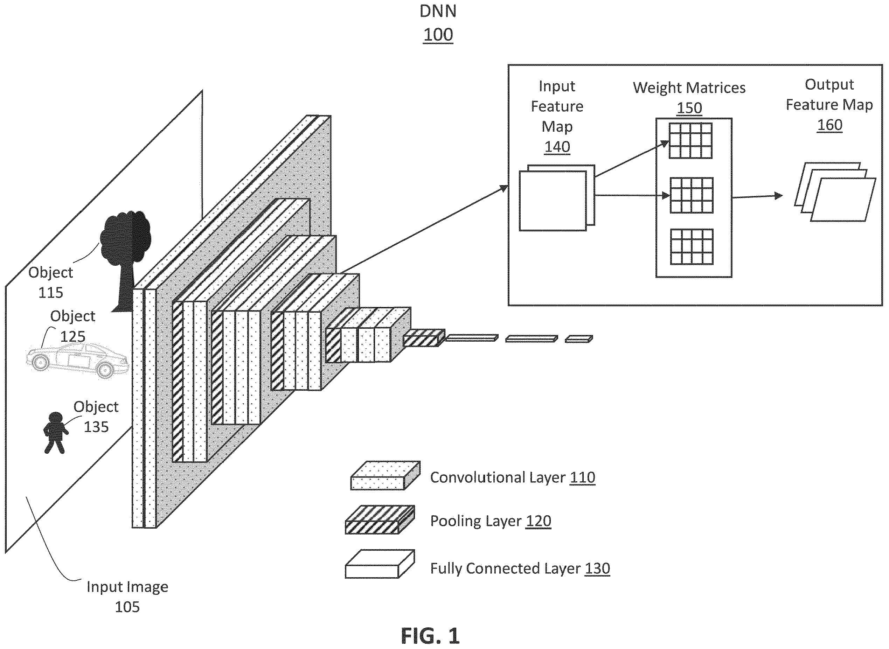

FIG. 1 illustrates an architecture of an example DNN 100, in accordance with various embodiments. For purpose of illustration, the DNN 100 in FIG. 1 is a Visual Geometry Group (VGG)-based convolutional neural network (CNN). In other embodiments, the DNN 100 may be other types of DNNs. The DNN 100 is trained to receive images and output classifications of objects in the images. In the embodiment of FIG. 1, the DNN 100 receives an input image 105 that includes objects 115, 125, and 135. The DNN 100 includes a sequence of layers comprising a plurality of convolutional layers 110 (individually referred to as "convolutional layer 110"), a plurality of pooling layers 120 (individually referred to as "pooling layer 120"), and a plurality of fully connected layers 130 (individually referred to as "fully connected layer 130"). In other embodiments, the DNN 100 may include fewer, more, or different layers.

The convolutional layers 110 summarize the presence of features in the input image 105. The convolutional layers 110 function as feature extractors. The first layer of the DNN 100 is a convolutional layer 110. In an example, a convolutional layer 110 performs a convolution to an IFM 140 by using weight matrices 150, generates an OFM 160 from the convolution, and passes the OFM 160 to the next layer in the sequence. The IFM 140 may include a plurality of IFM matrices. The OFM 160 may include a plurality of OFM matrices. For the first convolutional layer 110, which is also the first layer of the DNN 100, the IFM 140 is the input image 105. For the other convolutional layers, the IFM 140 may be an output of another convolutional layer 110 or an output of a pooling layer 120. The convolution is a linear operation that involves the multiplication of the weight matrices 150 with the IFM 140. A filter may be a 2-dimensional array of weights. Weights of the filters can be initialized and updated by backpropagation using gradient descent. The magnitudes of the weights of the filters can indicate importance of the weight matrices 150 in extracting features from the IFM 140. A filter can be smaller than the IFM 140.

The multiplication applied between a filter-sized patch of the IFM 140 and a filter may be a dot product. A dot product is the element-wise multiplication between the filter-sized patch of the IFM 140 and the corresponding filter, which is then summed, always resulting in a single value. Because it results in a single value, the operation is often referred to as the "scalar product." Using a filter smaller than the IFM 140 is intentional as it allows the same filter (set of weights) to be multiplied by the IFM 140 multiple times at different points on the IFM 140. Specifically, the filter is applied systematically to each overlapping part or filter-sized patch of the IFM 140, left to right, top to bottom. The result from multiplying the filter with the IFM 140 one time is a single value. As the filter is applied multiple times to the IFM 140, the multiplication result is a two-dimensional array of output values that represent a filtering of the IFM 140. As such, the 2-dimensional output array from this operation is referred to a "feature map."

In some embodiments, the OFM 160 is passed through an activation function. An example activation function is the rectified linear activation function (ReLU). ReLU is a calculation that returns the value provided as input directly, or the value 0 if the input is 0 or less. The convolutional layer 110 may receive several images as input and calculates the convolution of each of them with each of the filters. This process can be repeated several times. For instance, the OFM 160 is passed to the subsequent convolutional layer 110 (i.e., the convolutional layer 110 following the convolutional layer 110 generating the OFM 160 in the sequence). The subsequent convolutional layers 110 performs a convolution on the OFM 160 with new filters and generates a new feature map. The new feature map may also be normalized and resized. The new feature map can be filtered again by a further subsequent convolutional layer 110, and so on.

In some embodiments, a convolutional layer 110 has four hyperparameters: the number of filters, the size F filters (e.g., a filter is of dimensions FxFxD pixels), the S step with which the window corresponding to the filter is dragged on the image (e.g., a step of 1 means moving the window one pixel at a time), and the zero-padding P (e.g., adding a black contour of P pixels thickness to the input image of the convolutional layer 110). The convolutional layers 110 may perform various types of convolutions, such as 2-dimensiontal convolution, dilated or atrous convolution, spatial separable convolution, depth-wise separable convolution, transposed convolution, and so on. The DNN 100 includes 16 convolutional layers 110. In other embodiments, the DNN 100 may include a different number of convolutional layers.

The pooling layers 120 down sample feature maps generated by the convolutional layers, e.g., by summarizing the presents of features in the patches of the feature maps. A pooling layer 120 is placed between two convolution layers 110: a preceding convolutional layer 110 (the convolution layer 110 preceding the pooling layer 120 in the sequence of layers) and a subsequent convolutional layer 110 (the convolution layer 110 subsequent to the pooling layer 120 in the sequence of layers). In some embodiments, a pooling layer 120 is added after a convolutional layer 110, e.g., after an activation function (e.g., ReLU) has been applied to the OFM 160.

A pooling layer 120 receives feature maps generated by the preceding convolution layer 110 and applies a pooling operation to the feature maps. The pooling operation reduces the size of the feature maps while preserving their important characteristics. Accordingly, the pooling operation improves the efficiency of the DNN and avoids over-learning. The pooling layers 120 may perform the pooling operation through average pooling (calculating the average value for each patch on the feature map), max pooling (calculating the maximum value for each patch of the feature map), or a combination of both. The size of the pooling operation is smaller than the size of the feature maps. In various embodiments, the pooling operation is 2x2 pixels applied with a stride of 2 pixels, so that the pooling operation reduces the size of a feature map by a factor of 2, e.g., the number of pixels or values in the feature map is reduced to one quarter the size. In an example, a pooling layer 120 applied to a feature map of 6x6 results in an output pooled feature map of 3x3. The output of the pooling layer 120 is inputted into the subsequent convolution layer 110 for further feature extraction. In some embodiments, the pooling layer 120 operates upon each feature map separately to create a new set of the same number of pooled feature maps.

The fully connected layers 130 are the last layers of the DNN. The fully connected layers 130 may be convolutional or not. The fully connected layers 130 receives an input vector. The input vector defines the output of the convolutional layers 110 and pooling layers 120 and includes the values of the last feature map generated by the last pooling layer 120 in the sequence. The fully connected layers 130 applies a linear combination and an activation function to the input vector and generates an output vector. The output vector may contain as many elements as there are classes: element i represents the probability that the image belongs to class i. Each element is therefore between 0 and 1, and the sum of all is worth 1. These probabilities are calculated by the last fully connected layer 130 by using a logistic function (binary classification) or a softmax function (multi-class classification) as an activation function.

In some embodiments, the fully connected layers 130 classify the input image 105 and returns a vector of size N, where N is the number of classes in the image classification problem. In the embodiment of FIG. 1, N equals 3, as there are three objects 115, 125, and 135 in the input image. Each element of the vector indicates the probability for the input image 105 to belong to a class. To calculate the probabilities, the fully connected layers 130 multiply each input element by weight, makes the sum, and then applies an activation function (e.g., logistic if N=2, softmax if N>2). This is equivalent to multiplying the input vector by the matrix containing the weights. In an example, the output vector includes three probabilities: a first probability indicating the object 115 being a tree, a second probability indicating the object 125 being a car, and a third probability indicating the object 135 being a person. In other embodiments where the input image 105 includes different objects or a different number of objects, the output vector can be different.

*Example DL Environment*

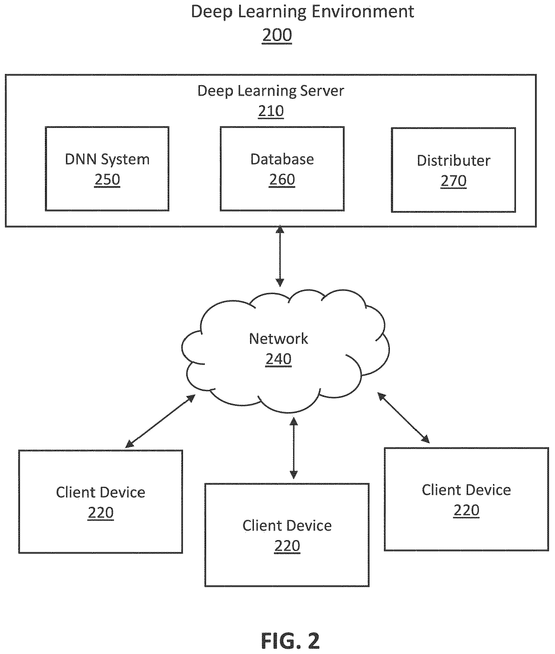

FIG. 2 illustrates a DL environment 200, in accordance with various embodiments. The DL environment 200 includes a DL server 210 and a plurality of client devices 220 (individually referred to as client device 220). The DL server 210 is connected to the client devices 220 through a network 240. In other embodiments, the DL environment 200 may include fewer, more, or different components.

The DL server 210 trains DL models using neural networks. A neural network is structured like the human brain and consists of artificial neurons, also known as nodes. These nodes are stacked next to each other in three types of layers: input layer, hidden layer(s), and output layer. Data provides each node with information in the form of inputs. The node multiplies the inputs with random weights, calculates them, and adds a bias. Finally, nonlinear functions, also known as activation functions, are applied to determine which neuron to fire. The DL server 210 can use various types of neural networks, such as DNN, recurrent neural network (RNN), generative adversarial network (GAN), long short term memory network (LSTMN), and so on. During the process of training the DL models, the neural networks use unknown elements in the input distribution to extract features, group objects, and discover useful data patterns. The DL models can be used to solve various problems, e.g., making predictions, classifying images, and so on. The DL server 210 may build DL models specific to particular types of problems that need to be solved. A DL model is trained to receive an input and outputs the solution to the particular problem.

In FIG. 2, the DL server 210 includes a DNN system 250, a database 260, and a distributer 270. The DNN system 250 trains DNNs. The DNNs can be used to process images, e.g., images captured by autonomous vehicles, medical devices, satellites, and so on. In an embodiment, a DNN receives an input image and outputs classifications of objects in the input image. An example of the DNNs is the DNN 100 described above in conjunction with FIG. 1. The DNN system also compresses the trained DNNs to reduce the sizes of the trained DNNs. As the compressed DNNs has a smaller size, application of the compressed DNNs requires less time and computing resources (e.g., memory, processor, etc.) compared with uncompressed DNNs. The compressed DNNs may be used on low memory systems, like mobile phones, IOT edge devices, and so on.

The database 260 stores data received, used, generated, or otherwise associated with the DL server 210. For example, the database 260 stores a training dataset that the DNN system 250 uses to train DNNs. As another example, the database 260 stores hyperparameters of the neural networks built by the DL server 210.

The distributer 270 distributes DL models generated by the DL server 210 to the client devices 220. In some embodiments, the distributer 270 receives a request for a DNN from a client device 220 through the network 240. The request may include a description of a problem that the client device 220 needs to solve. The request may also include information of the client device 220, such as information describing available computing resource on the client device. The information describing available computing resource on the client device 220 can be information indicating network bandwidth, information indicating available memory size, information indicating processing power of the client device 220, and so on. In an embodiment, the distributer may instruct the DNN system 250 to generate a DNN in accordance with the request. The DNN system 250 may generate a DNN based on the description of the problem. Alternatively or additionally, the DNN system 250 may compress a DNN based on the information describing available computing resource on the client device.

In another embodiment, the distributer 270 may select the DNN from a group of pre-existing DNNs based on the request. The distributer 270 may select a DNN for a particular client device 230 based on the size of the DNN and available resources of the client device 230. In embodiments where the distributer 270 determines that the client device 230 has limited memory or processing power, the distributer 270 may select a compressed DNN for the client device 230, as opposed to an uncompressed DNN that has a larger size. The distributer 270 then transmits the DNN generated or selected for the client device 220 to the client device 220.

In some embodiments, the distributer 270 may receive feedback from the client device 220. For example, the distributer 270 receives new training data from the client device 220 and may send the new training data to the DNN system 250 for further training the DNN. As another example, the feedback includes an update of the available computer resource on the client device 220. The distributer 270 may send a different DNN to the client device 220 based on the update. For instance, after receiving the feedback indicating that the computing resources of the client device 220 have been reduced, the distributer 270 sends a DNN of a smaller size to the client device 220.

The client devices 220 receive DNNs from the distributer 270 and applies the DNNs to solve problems, e.g., to classify objects in images. In various embodiments, the client devices 220 input images into the DNNs and uses the output of the DNNs for various applications, e.g., visual reconstruction, augmented reality, robot localization and navigation, medical diagnosis, weather prediction, and so on. A client device 220 may be one or more computing devices capable of receiving user input as well as transmitting and/or receiving data via the network 240. In one embodiment, a client device 220 is a conventional computer system, such as a desktop or a laptop computer. Alternatively, a client device 220 may be a device having computer functionality, such as a personal digital assistant (PDA), a mobile telephone, a smartphone, an autonomous vehicle, or another suitable device. A client device 220 is configured to communicate via the network 240. In one embodiment, a client device 220 executes an application allowing a user of the client device 220 to interact with the DL server 210 (e.g., the distributer 270 of the DL server 210). The client device 220 may request DNNs or send feedback to the distributer 270 through the application. For example, a client device 220 executes a browser application to enable interaction between the client device 220 and the DL server 210 via the network 240. In another embodiment, a client device 220 interacts with the DL server 210 through an application programming interface (API) running on a native operating system of the client device 220, such as IOS® or ANDROID™.

In an embodiment, a client device 220 is an integrated computing device that operates as a standalone network-enabled device. For example, the client device 220 includes display, speakers, microphone, camera, and input device. In another embodiment, a client device 220 is a computing device for coupling to an external media device such as a television or other external display and/or audio output system. In this embodiment, the client device 220 may couple to the external media device via a wireless interface or wired interface (e.g., an HDMI cable) and may utilize various functions of the external media device such as its display, speakers, microphone, camera, and input devices. Here, the client device 220 may be configured to be compatible with a generic external media device that does not have specialized software, firmware, or hardware specifically for interacting with the client device 220.

The network 240 supports communications between the DL server 210 and client devices 220. The network 240 may comprise any combination of local area and/or wide area networks, using both wired and/or wireless communication systems. In one embodiment, the network 240 may use standard communications technologies and/or protocols. For example, the network 240 may include communication links using technologies such as Ethernet, 802.11, worldwide interoperability for microwave access (WiMAX), 3G, 4G, code division multiple access (CDMA), digital subscriber line (DSL), etc. Examples of networking protocols used for communicating via the network 240 may include multiprotocol label switching (MPLS), transmission control protocol/Internet protocol (TCP/IP), hypertext transport protocol (HTTP), simple mail transfer protocol (SMTP), and file transfer protocol (FTP). Data exchanged over the network 240 may be represented using any suitable format, such as hypertext markup language (HTML) or extensible markup language (XML). In some embodiments, all or some of the communication links of the network 240 may be encrypted using any suitable technique or techniques.

*Example DNN System*

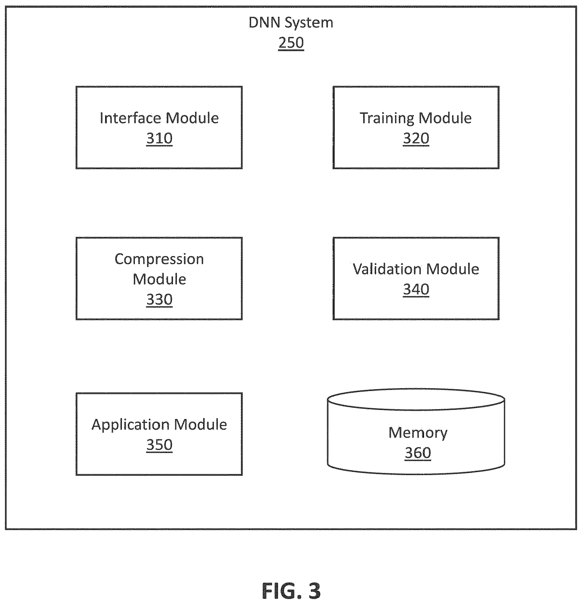

FIG. 3 is a block diagram of the DNN system 250, in accordance with various embodiments. The DNN system 250 trains and compresses DNNs. In other embodiments, the DNN system 250 can train or compress other types of deep neural networks, such as RNNs, and so on. The DNN system 250 can train and compress DNNs that can be used to recognize object in images. In other embodiments, the DNN system 250 can be applied to train DL models for other tasks, such as learning relationships between biological cells (e.g., DNA, proteins, etc.), control behaviors for devices (e.g., robots, machines, etc.), and so on. The DNN system 250 includes an interface module 310, a training module 320, a compression module 330, a validation module 340, an application module 350, and a memory 360. In other embodiments, alternative configurations, different or additional components may be included in the DNN system 250. Further, functionality attributed to a component of the DNN system 250 may be accomplished by a different component included in the DNN system 250 or a different system.

The interface module 310 facilitates communications of the DNN system 250 with other systems. For example, the interface module 310 establishes communications between the DNN system 250 with an external database to receive data that can be used to train DNNs or input into DNNs to perform tasks. As another example, the interface module 310 supports the DNN system 250 to distribute DNNs to other systems, e.g., computing devices configured to apply DNNs to perform tasks.

The training module 320 trains DNNs by using a training dataset. The training module 320 forms the training dataset. In an embodiment where the training module 320 trains a DNN to recognize objects in images, the training dataset includes training images and training labels. The training labels describe ground-truth classifications of objects in the training images. In some embodiments, each label in the training dataset corresponds to an object in a training image. In some embodiments, a part of the training dataset may be used to initially train the DNN, and the rest of the training dataset may be held back as a tuning subset used by the compression module 330 to tune a compressed DNN or as a validation subset used by the validation module 340 to validate performance of a trained or compressed DNN. The portion of the training dataset not including the tuning subset and the validation subset may be used to train the DNN.

The training module 320 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the DL algorithm works through the entire training dataset. One epoch means that each training sample in the training dataset has had an opportunity to update the parameters inside the DNN. An epoch may include one or more batches. The number of epochs may be 10, 100, 500, 1000, or even larger.

The training module 320 defines the architecture of the DNN, e.g., based on some of the hyperparameters. The architecture of the DNN includes an input layer, an output layer, and a plurality of hidden layers. The input layer of a DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as rectified liner unit (ReLU) layers, pooling layers, fully connected layers, normalization layers, softmax or logistic layers, and so on. The convolutional layers of the DNN abstract the input image to a feature map that is represented by a tensor specifying the feature map height, the feature map width, and the feature map channels (e.g., red, green, blue images include three channels). A pooling layer is used to reduce the spatial volume of input image after convolution. It is used between two convolution layers. A fully connected layer involves weights, biases, and neurons. It connects neurons in one layer to neurons in another layer. It is used to classify images between different category by training.

The training module 320 inputs the training dataset into the DNN and modifies the parameters inside the DNN to minimize the error between the generated labels of objects in the training images and the training labels. The parameters include weights of filters in the convolutional layers of the DNN. In some embodiments, the training module 320 uses a cost function to minimize the error. After the training module 320 finishes the predetermined number of epochs, the training module 320 may stop updating the parameters in the DNN. The DNN having the updated parameters is referred to as a trained DNN.

The compression module 330 compresses trained DNNs to reduce complexity of the trained DNNs at the cost of small loss in model accuracy. The compression module 330 prunes filters in a trained DNN to compress the DNN. In some embodiments, the compression module 330 generates a sequential graph representation of the workload of a trained DNN. The sequential graph representation includes a sequence of nodes. Each graph represents a layer or activation in the DNN. The order of the nodes may be consistent with the order of the layers and activations in the DNN. Each graph includes features determined based on attributes of the corresponding layer or activation. The compression module 330 inputs the sequential graph representation into a GNN. The compression module 330 may also input an evaluation metric into the GNN. The GNN 440 generates graph groups, each of which includes one or more nodes. A graph group corresponds to a layer group that includes one or more layers represented by the nodes in the graph group. A graph group may also include one or more nodes representing one or more activations. Accordingly, a layer group may also include one or more activations. The GNN 440 also outputs a pruning ratio for each group.

The compression module 330 uses the pruning ratio to prune the filters of the layers in the group. The pruning ratio indicates a percentage of filters to be pruned from the layers in the group. The compression module 330 may rank the filters and select the percentage of the filters. The compression module 330 can change the magnitudes of the weights in each selected filter to zero. As the filters of the layers are pruned, the layers are compressed. In some embodiments, zero-valued filters can be discarded from the DNN. The compression module 330 may replace the layers with the compressed layers in the DNN to update the DNN. The updated/compressed DNN has a smaller size than the trained DNN.

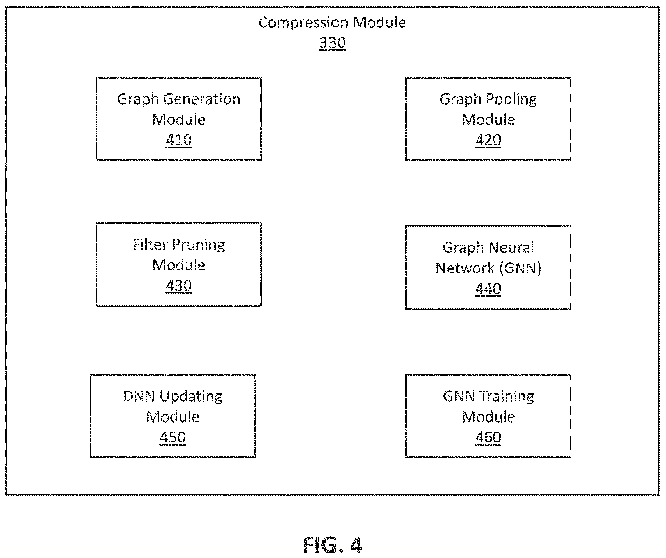

The compression module 330 may fine-tune the compressed DNN. For instance, the compression module 330 uses the training dataset, or a subset of the training dataset, to train the compressed DNN. As the compressed DNN is converted from the pre-trained DNN, the fine-tuning process is a re-training process. In some embodiments, the compression module 330 retrains a compressed DNN by using the same training dataset that the training module 320 used to train the pre-trained DNN. The compression module 330 may re-train the compressed DNN for a smaller number of epochs than the number of epochs used by the training module 320 to train the pre-trained DNN. In some embodiments, the compression module 330 may use a different training dataset to re-train the compressed DNN. The re-training process can allow the network to holistically calibrate the new compressed tensors. More details about the compression module 330 are described below in conjunction with FIG. 4.

The validation module 340 verifies accuracy of trained or compressed DNN. In some embodiments, the validation module 340 inputs samples in a validation dataset into the DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 340 determines may determine an accuracy score measuring the precision, recall, or a combination of precision and recall of the DNN. The validation module 340 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 340 may compare the accuracy score with a threshold score. In an example where the validation module 340 determines that the accuracy score of the augmented model is lower than the threshold score, the validation module 340 instructs the training module 320 or the compression module 330 to re-train the DNN. In one embodiment, the training module 320 or the compression module 330 may iteratively re-train the DNN until the occurrence of a stopping condition, such as the accuracy measurement indication that the DNN may be sufficiently accurate, or a number of training rounds having taken place.

In some embodiments, the validation module 340 instructs the compression module 330 to compress DNNs. For example, the validation module 340 may determine whether an accuracy score of a compressed DNN is above a threshold score. In response to determining that the accuracy score of a compressed DNN is above a threshold score, the validation module 340 instructs the compression module 330 to further compress the DNN, e.g., by compressing an uncompressed convolutional layer in the DNN. In an embodiment, the validation module 340 may determine a compression rate based on the accuracy score and instructs the compression module 330 to further compress the DNN based on the compression rate. The compression rate, e.g., is a percentage indicating the reduced size of the DNN from compression.

The application module 350 applies the trained or compressed DNN to perform tasks. For instance, the application module 350 inputs images into the DNN. The DNN outputs classifications of objects in the images. As an example, the DNN may be provisioned in a security setting to detect malicious or hazardous objects in images captured by security cameras. As another example, the DNN may be provisioned to detect objects (e.g., road signs, hazards, humans, pets, etc.) in images captured by cameras of an autonomous vehicle. The input to the DNN may be formatted according to a predefined input structure mirroring the way that the training dataset was provided to the DNN. The DNN may generate an output structure which may be, for example, a classification of the image, a listing of detected objects, a boundary of detected objects, or the like. In some embodiments, the application module 350 distributes the DNN to other systems, e.g., computing devices in communication with the DNN system 250, for the other systems to apply the DNN to perform the tasks.

The memory 360 stores data received, generated, used, or otherwise associated with the DNN system 250. For example, the memory 360 stores the datasets used by the training module 320, compression module 330, and the validation module 340. The memory 360 may also store data generated by the training module 320, compression module 330, and the validation module 340, such as the hyperparameters for training DNNs, algorithms for compressing DNNs, etc. The memory 360 may further store DNNs generated by the training module 320 and the compression module 330. In the embodiment of FIG. 1, the memory 360 is a component of the DNN system 250. In other embodiments, the memory 360 may be external to the DNN system 250 and communicate with the DNN system 250 through a network.

*Example Compression Module*

FIG. 4 is a block diagram of the compression module 330, in accordance with various embodiments. In the embodiment of FIG. 4, the compression module 330 includes a graph generation module 410, a graph pooling module 420, a filtering pruning module 430, a GNN 440, a DNN updating module 450, and a GNN training module 460. Further, functionality attributed to a component of the compression module 330 may be accomplished by a different component included in the compression module 330, a different module, or a different system.

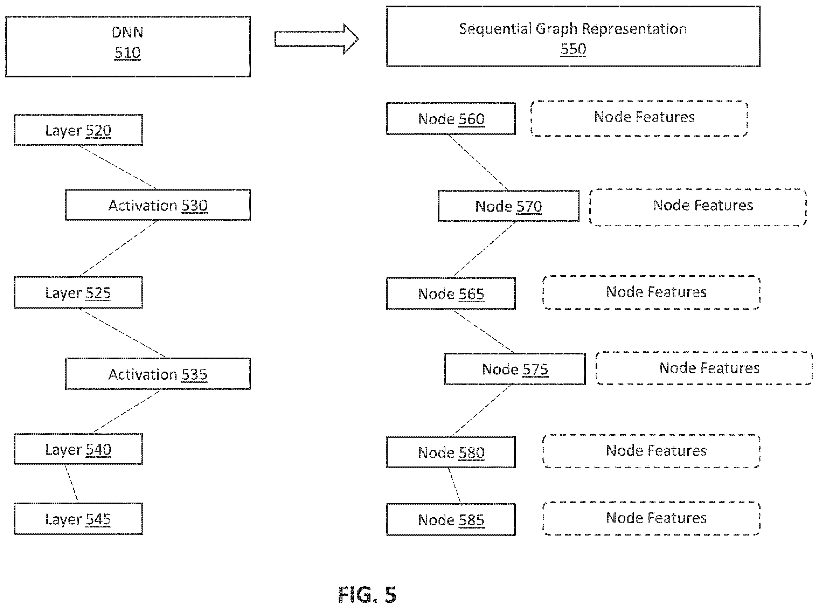

The graph generation module 410 generates sequential graph representations of trained DNNs. In some embodiments, the graph generation module 410 identifies the hidden layers and activations in a trained DNN. For each hidden layer, the graph generation module 410 generates a graph representation of the hidden layer ("node"). For instance, the graph generation module 410 identifies one or more attributes of the hidden layer. Example attributes include size of input feature map, size of output feature map, size of filter, operation identity, other attributes of the hidden layer, or some combination thereof. The graph generation module 410 may generate one or more features based on an attribute of the hidden layer and generates the node of the hidden layer based on the graph features. The graph generation module 410 may also generate a graph representation for each activation. An activation may be expressed as tensor operations. An activation receives an output from a layer and converts the output of the layer to an input of the next layer. As an activation can provide context of how the layers impact each other, a sequential graph representation, which includes graph representations of activations, may make the GNN 440 return better graph pooling results. More details about graph pooling are described below. A sequential graph representation of a DNN includes a sequence of nodes arranged in an order that matches the order how the layers and activations are arranged in the DNN. More information about sequential graph representation is described below in conjunction with FIG. 5.

The graph pooling module 420 groups DNN hidden layers and generates pruning ratios for layer groups based on sequential graph representations and the GNN 440. For example, the graph pooling module 420 input a sequential graph representation of a DNN into the GNN 440. The GNN 440 has been trained, e.g., by the GNN training module 460, to receive sequential graph representations and outputs layer groups and pruning ratios of layer groups.

The GNN 440 may include a learnable graph pooling model and a learnable pruning ratio model. The graph pooling model clusters neighboring nodes in the sequential graph representation through a graph pooling process. The graph pooling is learnable process that analyzes relationships between nodes (e.g., based on connectivity or dependency between the layers represented by the nodes) and clusters associated nodes into a group. The group may include multiple neighboring hidden layers in the DNN. The layer group may also include an activation between two neighboring hidden layers. The group will be provided to the pruning ratio model as an input, and the pruning ratio model outputs a pruning ratio for the group, as opposed to a pruning ratio for each layer. That way, the output (pruning ratios) of the GNN is reduced to facilitate filter pruning on a per-group basis.

In some embodiments, the graph pooling model analyzes dependency between layers. For example, a convolutional layer can depend on a preceding convolutional layer (i.e., another convolutional layer in the DNN that precedes the convolutional layer), as pruning a filter in the preceding convolutional layer can cause a filter size change in the convolutional layer. After detecting such a dependency, the graph pooling model can cluster the two convolutional layers into one group. In another example, the graph pooling model clusters two convolutional layers into one group where the outputs of two convolutional layers are concatenated. In such a case, pruning a filter in one of the convolutional layers will require the same filter in the other convolutional layer to be pruned, which results in further compression. The group may include other convolutional layers that depend on one or both of the two convolutional layers. The group may also include activations or other types of layers associated with the two convolutional layers, such as an activation between the two convolutional layers, a pooling layer between the two convolutional layers, etc.

The pruning ratio model receives the graph groups and outputs a pruning ratio for each graph group. As each graph group corresponds to a layer group, the pruning ratio is for the corresponding layer group. Compared with technologies that prune filters on a per-hidden layer basis, the graph pooling process reduces the output of the GNN and facilitates filter pruning on a per-group basis.

In some embodiments, the graph pooling module 420 also inputs an evaluation metric into the GNN 440 in addition to the sequential graph representation. The evaluation metric includes a target accuracy of the DNN after filter pruning based on pruning ratio. The evaluation metric may also include other measures, such as time for running the GNN, available resources (e.g., computing power, memory, etc.) for running the GNN, sparsity level, and so on.

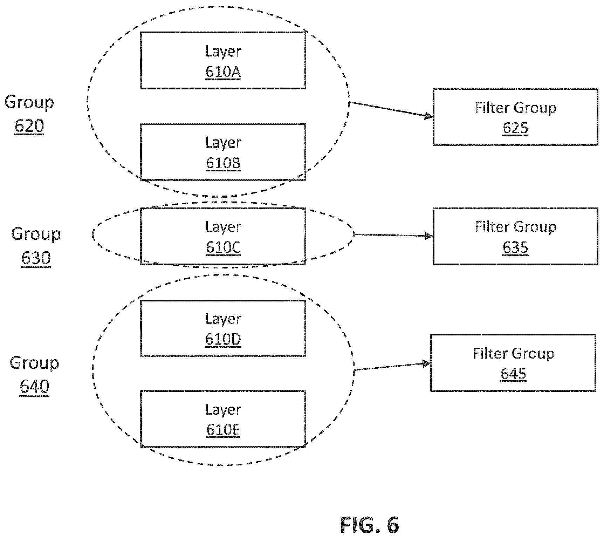

The pruning ratio may be a number representing a percentage of filters to be pruned from the hidden layers in the group. The pruning ratio may range from zero to one. The pruning ratio represents a desired sparsity level of the hidden layers in the group. Examples of the pruning ratio include 5%, 10%, 15%, 20%, or other percentages. As the pruning ratio corresponds to a layer group that includes multiple hidden layers, the number of filter groups are reduced, compared with technologies that prune filters hidden layer by hidden layer. More information about graph pooling is described below in conjunction with FIG. 6.

The filter pruning module 430 prunes filters in DNNs based on pruning ratios output from the GNN 440. The filter pruning module 430 accesses the filters of the hidden layers in a layer group and ranks the filters. In some embodiments, the filter pruning module 430 ranks the filters based on the magnitudes of the weights of the filters. In an embodiment, the filter pruning module 430 uses the following algorithm to perform filter magnitude ranking:

$$\sum_{i,j} |K_{ij}|$$

where L denotes the convolutional hidden layer, K is a filter (e.g., a 3x3 array), and the indices (i,j) vary over the filter indices. The filter pruning module 430 uses the algorithm to determine a sum of absolute magnitudes of a filter. The filter pruning module 430 ranks the filters based on the absolute magnitude sum of each of the filters. For instance, a filter having a larger absolute magnitude sum is ranked higher. In other embodiments, the filter pruning module 430 may rank the filters in different ways.

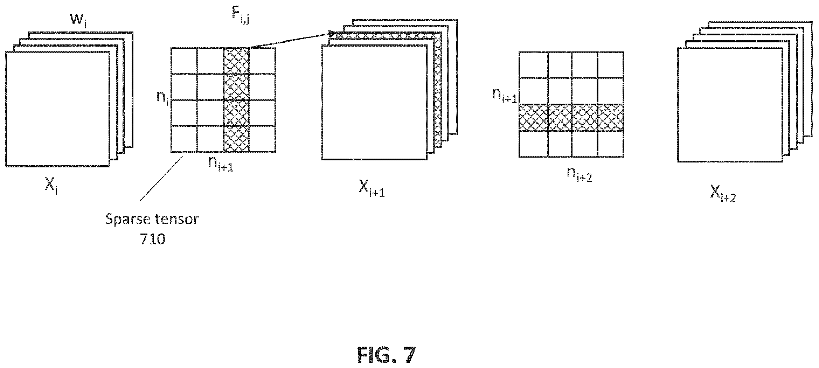

Further, the filter pruning module 430 selects a subset of the filters based on the pruning ratio. For instance, in embodiments where the pruning ratio is 10%, the filter pruning module 430 selects 10% of the filters based on the ranking, e.g., the 10% filters that have lower absolute magnitude sum than the remaining 90% filters. The filter pruning module 430 may set the magnitudes of the weights of the selected filters to zero. As a result of the filter pruning, the filter pruning module 430 increases sparsity in the hidden layers and reduces the size of the hidden layers, i.e., compresses the hidden layers. In some embodiments, the filter pruning module 430 may prune filters for other layer groups. In an embodiment, the filter pruning module 430 prunes filters for all the layer groups. More information about filter pruning is described below in conjunction with FIG. 7.

The DNN updating module 450 updates trained DNNs with compressed hidden layers. In an example, the DNN updating module 450 replaces the hidden layers in a trained DNN with the compressed hidden layers that were generated by the filter pruning module 430 by pruning the filters of the hidden layers. The updated DNN is also referred to as compressed DNN. As the compressed hidden layers have higher sparsity, the workload of the compressed DNN is less than the workload of the trained DNN. Also, as the hidden layers in the DNN carries out sequential convolutional operations, a pruned filter in a compressed hidden layer can affect subsequent filters of a hidden layer that is not compressed, which can further reduce the workload of the DNN. This leads to a sparser workload that can run in an accelerated fashion.

The GNN training module 460 trains the GNN 440 used to cluster hidden layers and to determine groupwise pruning ratios. In some embodiments, the GNN training module defines an architecture of the GNN 440 and determines hyperparameters of the training process of the GNN 440. The GNN training module 460 forms a training dataset including training samples. Each training sample may include a sequential graph representation of a DNN and one or more pruning ratios. The GNN training module 460 inputs the training samples into the GNN to adjust internal parameters of the GNN 440. In some embodiments, the GNN training module 460 trains the GNN 440 by using techniques described above in conjunction with the training module 320 in FIG. 3.

The GNN training module 460 may also continuously train the GNN 440. For instance, after the GNN 440 receives a sequential graph representation and pruning ratios, the GNN training module 460 may use the sequential graph representation and pruning ratios as new a training sample to further train the GNN 440. The GNN training module 460 may use the sequential graph representation and pruning ratios as either a positive training sample or negative training sample. In some embodiments, the GNN training module 460 determines whether an accuracy of the DNN that is updated by using the pruning ratios is higher than a target accuracy. The target accuracy may be an accuracy of the trained DNN, i.e., the DNN before filter pruning, or a threshold accuracy. In embodiments the accuracy of the updated DNN is higher than the target accuracy, the GNN training module 460 uses the sequential graph representation and pruning ratios as a positive training sample. Otherwise, the GNN training module 460 may use the sequential graph representation and pruning ratios as a negative training sample.

*Example Sequential Graph Representation*

FIG. 5 illustrates a sequential graph representation 550 of a DNN 510, in accordance with various embodiments. For purpose of simplicity and illustration, FIG. 5 shows four layers 520, 525, 540, and 545 of the DNN 510 and two activations 530 and 535. In other embodiments, the DNN may include more layers or more activations. The layers 520, 525, 540, and 545 may be convolutional layers. Each of the layers 520, 525, 540, and 545 includes one or more filters. The layers 520, 525, 540, and 545 and activations 530 and 535 are arranged in a sequence. The activation 530 is between the layers 520 and 525. The activation 530 applies an activation function (e.g., ReLU) on an output of the layer 520 and sends the result of the activation function to the layer 525 as an input of the layer 525. Similarly, the activation 535 is between the layers 525 and 540.

The sequential graph representation 550 represents the DNN 510. The sequential graph representation 550 may be generated by the graph generation module 410 in FIG. 4. The sequential graph representation 550 includes a sequence of nodes 560, 570, 565, 575, 580, and 585. Each node corresponds to a layer or activation in the DNN 510. For instance, the node 560 is generated from the layer 520, the node 570 is generated from the activation 530, and so on. The nodes 560, 570, 565, 575, 580, and 585 are arranged in an order that matches the order of the layers 520, 525, 540, and 545 and activations 530 and 535 in the DNN 510. Each node is associated with node features. The node features are generated based on attributes of the corresponding layer or activation. Example attributes include size of input feature map, size of output feature map, size of filter, operation identity, other attributes of the hidden layer, or some combination thereof.

*Example Layer Clustering*

FIG. 6 illustrates clustering layers of a DNN, in accordance with various embodiments. FIG. 6 shows five DNN layers 610A-E (collectively referred to as "layers 610" or "layer 610"). The DNN layers 610 may be convolutional layers. The layers 610 are clustered into three groups 620, 630, and 640. The group 620 includes the layers 610A-B, the group 630 includes the layer 610C, the group 630 includes the layers 610D-E. The layer clustering may be performed based on clustering of nodes in a sequential graph representing of the DNN, e.g., by the graph pooling module 420 described above.

The graph pooling module 420 clusters the layers 610A-B into the group 620 based on a dependency between the two layers 610A-B. In an embodiment, the layer 610A precedes the layer 610B in the network. The graph pooling module 420 determines that pruning a filter in the layer 610A will cause a filter size change in the layer 610B. After such a determination, the graph pooling module 420 groups the two layers 610A-B. Similarly, the graph pooling module 420 clusters the layers 610D-E into the group 630 based on a dependency between the two layers 610D-E. In an embodiment, the graph pooling module determines that outputs of the two layers 610D-E will be concatenated and that pruning a filter in the layer 610D will require the same filter in the layer 610E to be pruned. After such a determination, the graph pooling module 420 groups the two layers 610D-E. In contrast, the graph pooling module 420 analyzes the relationship between the layer 610 with the other layers 610A-B and D-E and does not capture any dependency. Accordingly, the graph pooling module 420 does not cluster the layer 610C with any of the other layers 610A-B and D-E.

The filters of the layers 610 are clustered based on the clustering of the layers 610. As shown in FIG. 6, the filters of the layers 610A-B are clustered into a filter group 625. Similarly, the filters of the layer 610C are clustered into a filter group 635, and the filters of the layers 610D-E are clustered into a filter group 635. Filter pruning can be performed on each filter group based on a group-wise pruning ratio. In the embodiment of FIG. 6, filter pruning will be performed on three filter groups. In contrast, filter pruning will have to be performed on five filter groups when the filter pruning on a per-layer basis. Thus, the graph pooling process improves the efficiency of filter pruning.

*Example Filter Pruning*

FIG. 7 illustrates filter pruning performed on a convolutional layer 110 of the DNN 100, in accordance with various embodiments. In the embodiment of FIG. 7, the convolutional layer 110 is the i-th convolutional layer of the DNN 100. The convolutional layer 110 receives feature maps (input feature maps $X_i$) and performs a convolution to convert the input feature maps $X_i$ to output feature maps $X_{i+1}$. The convolutional layer 110 has multiple input channels. The number of input channels of the convolutional layer 110 is $n_i$. The input tensor $X_i$ has a height $h_i$ and width $w_i$. The convolutional layer 110 converts the input feature maps $X_i \in \mathbb{R}^{n_i \times h_i \times w_i}$ into the output feature maps $X_{i+1} \in \mathbb{R}^{n_{i+1} \times h_{i+1} \times w_{i+1}}$. The output feature maps $X_{i+1}$ can be used as input feature maps for the subsequent convolutional layer 110. The convolutional layer 110 performs the convolution by applying $n_{i+1}$ 3D filters $F_{i,j} \in \mathbb{R}^{n_i \times k \times k}$ on the $n_i$ input channels, in which one filter generates one feature map.

Each filter is composed by $n_i$ 2D kernels $K \in \mathbb{R}^{k \times k}$ (e.g., 3 x 3). All the filters, together, constitute the kernel matrix (i.e., convolutional tensor) $F_i \in \mathbb{R}^{n_i \times n_{i+1} \times k \times k}$. The number of operations of the convolutional layer is $n_{i+1} n_i k^2 h_{i+1} w_{i+1}$.

In FIG. 7, a filter $F_{i,j}$ is pruned, e.g., by the filter pruning module 430. As a result of the pruning, a sparse tensor 710 is generated. Also, the corresponding feature map $X_{i+1,j}$ is removed, which reduces $n_i k^2 h_{i+1} w_{i+1}$ operations. The kernels that apply on the removed feature maps from the filters of the next convolutional layer are also removed, which saves an additional $n_{i+2} k^2 h_{i+2} w_{i+2}$ operations. Pruning m filters of the convolutional layer 110 will reduce $m/n_{i+1}$ of the computation cost for both the convolutional layer 110 (i.e., the i-th layer) and the subsequent convolutional layer (i.e., the (i+1)-th layer).

*Example Compressed DNN*

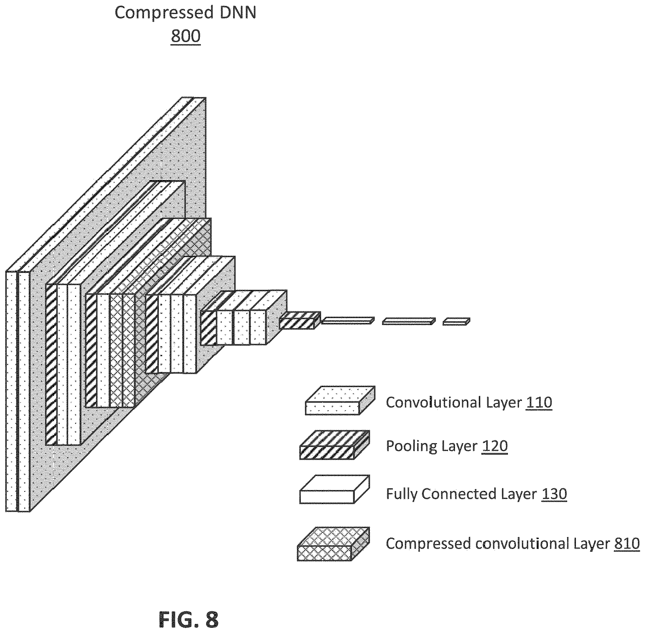

FIG. 8 illustrates an example compressed DNN 800, in accordance with various embodiments. The compressed DNN 800 includes a sequence of layers comprising a plurality of convolutional layers 110, pooling layers 120, fully connected layers 130, and compressed convolutional layers 810. The compressed convolutional layers 810 includes one or more pruned filters. The magnitudes of the weights in a pruned filter are zero. In the embodiment of FIG. 8, the compressed convolutional layer 810 is converted from convolutional layers 110 of the DNN 100, e.g., by the compression module 330. The convolutional layers 110, pooling layers 120, fully connected layers 130 of the compressed DNN 800 remain the same as those in the DNN 100. In other embodiments, more convolutional layers 110 can be converted into compressed convolutional layers 810. In some embodiments, all the convolutional layers 110 in the DNN 100 are converted into compressed convolutional layers 810. The size of the compressed DNN is smaller as more convolutional layers 110 are compressed and converted into compressed convolutional layers 810.

*Example Methods of Compressing DNN*

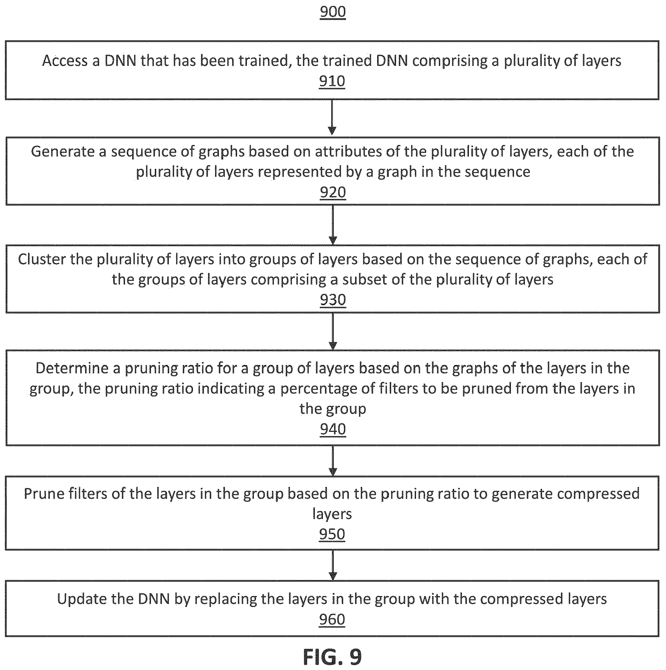

FIG. 9 is a flowchart showing a method 900 of compressing a DNN, in accordance with various embodiments. The method 900 may be performed by the compression module 330 described above in conjunction with FIGS. 3 and 4. Although the method 900 is described with reference to the flowchart illustrated in FIG. 9, many other methods of compressing a DNN may alternatively be used. For example, the order of execution of the steps in FIG. 9 may be changed. As another example, some of the steps may be changed, eliminated, or combined.

The compression module 330 accesses 910 the DNN. The DNN has been trained, e.g., by the DNN system 250 in FIGs. 2 and 3 using a training dataset for a predetermined number of epochs. The DNN includes a plurality of layers. The DNN also includes activations. An activation may be between two layers for converting an output of the first layer to an input of the second layer. An example of the DNN is the DNN 100 shown in FIG. 1.

The compression module 330 generates 920 a sequence of nodes based on attributes of the plurality of layers. Each of the plurality of layers is represented by a graph in the sequence. In some embodiments, the compression module 330 determines one or more attributes of each layer and generates a graph in the sequence based on the one or more attributes. The graph includes features corresponding to the attributes of the layer. The one or more attributes may be selected from a group consisting of size of input data, size of output data, size of kernel, and some combination thereof. The compression module 330 may also generate nodes representing the activations in the DNN. The nodes representing the activations are included in the sequence based on the sequence of the layers and activations in the DNN. For instance, the compression module 330 determines one or more attributes of each activation and generates a graph representing the activation based on the one or more attributes.

The compression module 330 clusters 930 the plurality of layers into groups of layers based on the sequence of nodes. Each of the groups of layers comprising a subset of the plurality of layers. A group may also include one or more activations. In some embodiments, the compression module 330 generates the groups by inputting the sequence of nodes into a graph pooling model and the graph pooling model outputs the groups. The graph pooling model may be a part of a pre-trained GNN.

The compression module 330 determines 940 a pruning ratio for a group of layers based on the nodes of the layers in the group. The pruning ratio indicates a percentage of filters to be pruned from the layers in the group. In some embodiments, the compression module 330 determines the pruning ratio by inputting the nodes of the layers in the group into a pre-trained GNN and the GNN outputs the pruning ratio.

The compression module 330 prunes 950 filters of the layers in the group based on the pruning ratio. For instance, the compression module 330 removes the percentage of the filters. The compression module 330 may change the values of the weights of the removed filters to zero. In some embodiments, the compression module 330 groups the filters from the layers and prunes the filters as a group. The compression module 330 may rank the filters based on magnitude of weights in the filters. The compression module 330 then selects one or more filters from the filters based on the ranking and pruning ratio and changes magnitudes of weights of the one or more filters to zero.

The compression module 330 updates the DNN by replacing the layers in the group with the compressed layers. The updated DNN is a compressed DNN. In some embodiments, the compression module 330 may compress other layers of the DNN, or even all the layers of the DNN, to compress the DNN.

In some embodiments, the compression module 330 may further train the GNN by using the pruning ratio and the nodes of the layers in the group as a new training sample. The compression module 330 may determine whether an accuracy of the updated DNN is higher than a target accuracy, e.g., based on data received from the validation module 340. In response to determining that the accuracy of the updated DNN is higher than the target accuracy, the compression module 330 uses the pruning ratio and the nodes of the layers in the group as a positive training sample. in response to determining that the accuracy of the updated DNN is lower than the target accuracy, the compression module 330 the pruning ratio and the nodes of the layers in the group as a negative training sample.

*Example Computing Device*

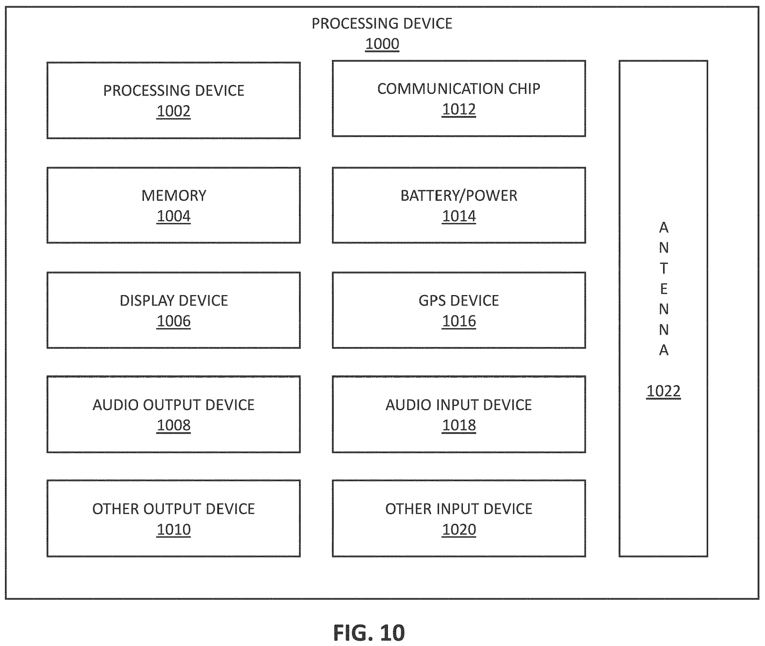

FIG. 10 is a block diagram of an example computing system for use as the DNN system 250, in accordance with various embodiments. A number of components are illustrated in FIG. 10 as included in the computing system 1000, but any one or more of these components may be omitted or duplicated, as suitable for the application. In some embodiments, some or all of the components included in the computing system 1000 may be attached to one or more motherboards. In some embodiments, some or all of these components are fabricated onto a single system on a chip (SoC) die. Additionally, in various embodiments, the computing system 1000 may not include one or more of the components illustrated in FIG. 10, but the computing system 1000 may include interface circuitry for coupling to the one or more components. For example, the computing system 1000 may not include a display device 1006, but may include display device interface circuitry (e.g., a connector and driver circuitry) to which a display device 1006 may be coupled. In another set of examples, the computing system 1000 may not include an audio input device 1018 or an audio output device 1008, but may include audio input or output device interface circuitry (e.g., connectors and supporting circuitry) to which an audio input device 1018 or audio output device 1008 may be coupled.

The computing system 1000 may include a processing device 1002 (e.g., one or more processing devices). As used herein, the term "processing device" or "processor" may refer to any device or portion of a device that processes electronic data from registers and/or memory to transform that electronic data into other electronic data that may be stored in registers and/or memory. The processing device 1002 may include one or more digital signal processors (DSPs), application-specific ICs (ASICs), central processing units (CPUs), graphics processing units (GPUs), cryptoprocessors (specialized processors that execute cryptographic algorithms within hardware), server processors, or any other suitable processing devices. The computing system 1000 may include a memory 1004, which may itself include one or more memory devices such as volatile memory (e.g., DRAM), nonvolatile memory (e.g., read-only memory (ROM)), flash memory, solid state memory, and/or a hard drive. In some embodiments, the memory 1004 may include memory that shares a die with the processing device 1002. In some embodiments, the memory 1004 includes one or more non-transitory computer-readable media storing instructions executable to perform operations for compressing a DNN, e.g., the method 900 described above in conjunction with FIG. 9 or the operations performed by the compression module 330 described above in conjunction with FIGS. 3 and 4. The instructions stored in the one or more non-transitory computer-readable media may be executed by the processing device 1002.

In some embodiments, the computing system 1000 may include a communication chip 1012 (e.g., one or more communication chips). For example, the communication chip 1012 may be configured for managing wireless communications for the transfer of data to and from the computing system 1000. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not.

The communication chip 1012 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for Worldwide Interoperability for Microwave Access, which is a certification mark for products that pass conformity and interoperability tests for the IEEE 802.16 standards. The communication chip 1012 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 1012 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 1012 may operate in accordance with CDMA, Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 1012 may operate in accordance with other wireless protocols in other embodiments. The computing system 1000 may include an antenna 1022 to facilitate wireless communications and/or to receive other wireless communications (such as AM or FM radio transmissions).

In some embodiments, the communication chip 1012 may manage wired communications, such as electrical, optical, or any other suitable communication protocols (e.g., the Ethernet). As noted above, the communication chip 1012 may include multiple communication chips. For instance, a first communication chip 1012 may be dedicated to shorter-range wireless communications such as Wi-Fi or Bluetooth, and a second communication chip 1012 may be dedicated to longer-range wireless communications such as global positioning system (GPS), EDGE, GPRS, CDMA, WiMAX, LTE, EV-DO, or others. In some embodiments, a first communication chip 1012 may be dedicated to wireless communications, and a second communication chip 1012 may be dedicated to wired communications.

The computing system 1000 may include battery/power circuitry 1014. The battery/power circuitry 1014 may include one or more energy storage devices (e.g., batteries or capacitors) and/or circuitry for coupling components of the computing system 1000 to an energy source separate from the computing system 1000 (e.g., AC line power).

The computing system 1000 may include a display device 1006 (or corresponding interface circuitry, as discussed above). The display device 1006 may include any visual indicators, such as a heads-up display, a computer monitor, a projector, a touchscreen display, a liquid crystal display (LCD), a light-emitting diode display, or a flat panel display, for example.

The computing system 1000 may include an audio output device 1008 (or corresponding interface circuitry, as discussed above). The audio output device 1008 may include any device that generates an audible indicator, such as speakers, headsets, or earbuds, for example.

The computing system 1000 may include an audio input device 1018 (or corresponding interface circuitry, as discussed above). The audio input device 1018 may include any device that generates a signal representative of a sound, such as microphones, microphone arrays, or digital instruments (e.g., instruments having a musical instrument digital interface (MIDI) output).

The computing system 1000 may include a GPS device 1016 (or corresponding interface circuitry, as discussed above). The GPS device 1016 may be in communication with a satellite-based system and may receive a location of the computing system 1000, as known in the art.

The computing system 1000 may include an other output device 1010 (or corresponding interface circuitry, as discussed above). Examples of the other output device 1010 may include an audio codec, a video codec, a printer, a wired or wireless transmitter for providing information to other devices, or an additional storage device.

The computing system 1000 may include an other input device 1020 (or corresponding interface circuitry, as discussed above). Examples of the other input device 1020 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing system 1000 may have any desired form factor, such as a handheld or mobile computing system (e.g., a cell phone, a smart phone, a mobile internet device, a music player, a tablet computer, a laptop computer, a netbook computer, an ultrabook computer, a PDA, an ultramobile personal computer, etc.), a desktop computing system, a server or other networked computing component, a printer, a scanner, a monitor, a set-top box, an entertainment control unit, a vehicle control unit, a digital camera, a digital video recorder, or a wearable computing system. In some embodiments, the computing system 1000 may be any other electronic device that processes data.

*Select Examples*

The following paranodes provide various examples of the embodiments disclosed herein.

Example 1 provides a method for compressing a deep neural network (DNN), the method including: accessing the DNN that has been trained, the DNN including a plurality of layers; generating a sequence of graph representations based on attributes of the plurality of layers, each of the plurality of layers represented by a graph representation in the sequence; clustering the plurality of layers into groups of layers based on the sequence of graph representations, each of the groups of layers including a subset of the plurality of layers; determining a pruning ratio for a group of layers based on the graph representations of the layers in the group, the pruning ratio indicating a percentage of filters to be pruned from the layers in the group; pruning filters of the layers in the group based on the pruning ratio to generate compressed layers; and updating the DNN by replacing the layers in the group with the compressed layers.

Example 2 provides the method of example 1, where determining the pruning ratio for the group based on the graph representations of the layers in the group includes: inputting the graph representations of the layers in the group into a pre-trained graph representation neural network, the pre-trained graph representation neural network outputting the pruning ratio.

Example 3 provides the method of example 2, further including: further training the graph representation neural network by using the pruning ratio and the graph representations of the layers in the group as a new training sample.

Example 4 provides the method of example 3, where further training the graph representation neural network includes: determining whether an accuracy of the updated DNN is higher than a target accuracy; and in response to determining that the accuracy of the updated DNN is higher than the target accuracy, using the pruning ratio and the graph representations of the layers in the group as a positive training sample.

Example 5 provides the method of example 4, where further training the graph representation neural network further includes: in response to determining that the accuracy of the updated DNN is lower than the target accuracy, using the pruning ratio and the graph representations of the layers in the group as a negative training sample.

Example 6 provides the method of example 1, where generating the sequence of graph representations includes: for each respective layer of the plurality of layers: determining one or more attributes of the respective layer; and generating a graph representation in the sequence based on the one or more attributes.

Example 7 provides the method of example 6, where the one or more attributes are selected from a group consisting of size of input data, size of output data, size of kernel, and some combination thereof.

Example 8 provides the method of example 6, where the DNN further includes activations configured to apply activation functions on outputs of some of the plurality of layers; and generating the sequence of graph representations further includes: for each respective activation of the activations: determining one or more attributes of the respective activation, and generating a graph representation in the sequence based on the one or more attributes.

Example 9 provides the method of example 1, where clustering the plurality of layers into groups based on the sequence of graph representations includes: inputting the graphs of the layers and an evaluation metric into a graph pooling model, the graph pooling model outputs the groups, where the evaluation metric includes a target accuracy of the updated DNN.

Example 10 provides the method of example 1, where pruning the filters of the layers in the group based on the pruning ratio includes: ranking the filters based on magnitudes of weights in the filters; selecting one or more filters from the filters based on the ranking and the pruning ratio; and changing magnitudes of weights in the one or more filters to zero.

Example 11 provides one or more non-transitory computer-readable media storing instructions executable to perform operations for compressing a deep neural network (DNN), the operations including: accessing the DNN that has been trained, the DNN including a plurality of layers; generating a sequence of graph representations based on attributes of the plurality of layers, each of the plurality of layers represented by a graph representation in the sequence; clustering the plurality of layers into groups of layers based on the sequence of graph representations, each of the groups of layers including a subset of the plurality of layers; determining a pruning ratio for a group of layers based on the graph representations of the layers in the group, the pruning ratio indicating a percentage of filters to be pruned from the layers in the group; pruning filters of the layers in the group based on the pruning ratio to generate compressed layers; and updating the DNN by replacing the layers in the group with the compressed layers.

Example 12 provides the one or more non-transitory computer-readable media of example 11, where determining the pruning ratio for the group based on the graph representations of the layers in the group includes:

inputting the graph representations of the layers in the group into a pre-trained graph representation neural network, the pre-trained graph representation neural network outputting the pruning ratio.

Example 13 provides the one or more non-transitory computer-readable media of example 12, where the operations further include: further training the graph representation neural network by using the pruning ratio and the graph representations of the layers in the group as a new training sample.

Example 14 provides the one or more non-transitory computer-readable media of example 13, where further training the graph representation neural network includes: determining whether an accuracy of the updated DNN is higher than a target accuracy; and in response to determining that the accuracy of the updated DNN is higher than the target accuracy, using the pruning ratio and the graph representations of the layers in the group as a positive training sample.

Example 15 provides the one or more non-transitory computer-readable media of example 14, where further training the graph representation neural network further includes: in response to determining that the accuracy of the updated DNN is lower than the target accuracy, using the pruning ratio and the graph representations of the layers in the group as a negative training sample.

Example 16 provides the one or more non-transitory computer-readable media of example 11, where generating the sequence of graph representations includes: for each respective layer of the plurality of layers: determining one or more attributes of the respective layer; and generating a graph representation in the sequence based on the one or more attributes.

Example 17 provides the one or more non-transitory computer-readable media of example 16, where the one or more attributes are selected from a group consisting of size of input data, size of output data, size of kernel, and some combination thereof.

Example 18 provides the one or more non-transitory computer-readable media of example 16, where the DNN further includes activations configured to apply activation functions on outputs of some of the plurality of layers; and generating the sequence of graph representations further includes: for each respective activation of the activations: determining one or more attributes of the respective activation, and generating a graph representation in the sequence based on the one or more attributes.

Example 19 provides the one or more non-transitory computer-readable media of example 11, where clustering the plurality of layers into groups based on the sequence of graph representations includes: inputting the graphs of the layers and an evaluation metric into a graph pooling model, the graph pooling model outputs the groups, where the evaluation metric includes a target accuracy of the updated DNN.

Example 20 provides the one or more non-transitory computer-readable media of example 11, where pruning the filters of the layers in the group based on the pruning ratio includes: ranking the filters based on magnitudes of weights in the filters; selecting one or more filters from the filters based on the ranking and the pruning ratio; and changing magnitudes of weights in the one or more filters to zero.

Example 21 provides an apparatus for compressing a deep neural network (DNN), the apparatus including: a computer processor for executing computer program instructions; and a non-transitory computer-readable memory storing computer program instructions executable by the computer processor to perform operations including: accessing the DNN that has been trained, the DNN including a plurality of layers, generating a sequence of graph representations based on attributes of the plurality of layers, each of the plurality of layers represented by a graph representation in the sequence, clustering the plurality of layers into groups of layers based on the sequence of graph representations, each of the groups of layers including a subset of the plurality of layers, determining a pruning ratio for a group of layers based on the graph representations of the layers in the group, the pruning ratio indicating a percentage of filters to be pruned from the layers in the group, pruning filters of the layers in the group based on the pruning ratio to generate compressed layers, and updating the DNN by replacing the layers in the group with the compressed layers.

Example 22 provides the apparatus of example 21, where determining the pruning ratio for the group based on the graph representations of the layers in the group includes: inputting the graph representations of the layers in the group into a pre-trained graph representation neural network, the pre-trained graph representation neural network outputting the pruning ratio.

Example 23 provides the apparatus of example 22, where the operations further include: further training the graph representation neural network by using the pruning ratio and the graph representations of the layers in the group as a new training sample.

Example 24 provides the apparatus of example 21, where generating the sequence of graph representations includes: for each respective layer of the plurality of layers: determining one or more attributes of the respective layer; and generating a graph representation in the sequence based on the one or more attributes.

Example 25 provides the apparatus of example 21, where pruning the filters of the layers in the group based on the pruning ratio includes: ranking the filters based on magnitudes of weights in the filters; selecting one or more filters from the filters based on the ranking and the pruning ratio; and changing magnitudes of weights in the one or more filters to zero.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

**Claims**

1. A method for compressing a deep neural network (DNN), the method comprising:

   accessing the DNN that has been trained, the DNN comprising a plurality of layers;
   generating a sequence of graph representations based on attributes of the plurality of layers, each of the plurality of layers represented by a graph representation in the sequence;
   clustering the plurality of layers into groups of layers based on the sequence of graph representations, each of the groups of layers comprising a subset of the plurality of layers;
   determining a pruning ratio for a group of layers based on the graph representations of the layers in the group, the pruning ratio indicating a percentage of filters to be pruned from the layers in the group;
   pruning filters of the layers in the group based on the pruning ratio to generate compressed layers; and
   updating the DNN by replacing the layers in the group with the compressed layers.

2. The method of claim 1, wherein determining the pruning ratio for the group based on the graph representations of the layers in the group comprises: inputting the graph representations of the layers in the group into a pre-trained graph representation neural network, the pre-trained graph representation neural network outputting the pruning ratio.

3. The method of claim 2, further comprising:
   further training the graph representation neural network by using the pruning ratio and the graph representations of the layers in the group as a new training sample.

4. The method of claim 3, wherein further training the graph representation neural network comprises:

   determining whether an accuracy of the updated DNN is higher than a target accuracy; and
   in response to determining that the accuracy of the updated DNN is higher than the target accuracy, using the pruning ratio and the graph representations of the layers in the group as a positive training sample.

**5.** The method of claim 4, wherein further training the graph representation neural network further comprises:
in response to determining that the accuracy of the updated DNN is lower than the target accuracy, using the pruning ratio and the graph representations of the layers in the group as a negative training sample.

**6.** The method of any of the preceding claims, wherein generating the sequence of graph representations comprises:
for each respective layer of the plurality of layers:

determining one or more attributes of the respective layer; and
generating a graph representation in the sequence based on the one or more attributes.

**7.** The method of claim 6, wherein the one or more attributes are selected from a group consisting of size of input data, size of output data, size of kernel, and some combination thereof.

**8.** The method of claim 6 or 7, wherein the DNN further comprises activations configured to apply activation functions on outputs of some of the plurality of layers; and generating the sequence of graph representations further comprises:
for each respective activation of the activations:

determining one or more attributes of the respective activation, and
generating a graph representation in the sequence based on the one or more attributes.

**9.** The method of any of the preceding claims, wherein clustering the plurality of layers into groups based on the sequence of graph representations comprises:

inputting the graphs of the layers and an evaluation metric into a graph pooling model, the graph pooling model outputting the groups, wherein the evaluation metric comprises a target accuracy of the updated DNN.

**10.** The method of any of the preceding claims, wherein pruning the filters of the layers in the group based on the pruning ratio comprises:

ranking the filters based on magnitudes of weights in the filters;
selecting one or more filters from the filters based on the ranking and the pruning ratio; and
changing magnitudes of weights in the one or more filters to zero.

**11.** One or more non-transitory computer-readable media storing instructions executable to perform the method of any of the preceding claims.

**12.** An apparatus for compressing a deep neural network (DNN), the apparatus comprising:

a computer processor for executing computer program instructions; and
a non-transitory computer-readable memory storing computer program instructions executable by the computer processor to perform operations comprising:

accessing the DNN that has been trained, the DNN comprising a plurality of layers,
generating a sequence of graph representations based on attributes of the plurality of layers, each of the plurality of layers represented by a graph representation in the sequence,
clustering the plurality of layers into groups of layers based on the sequence of graph representations, each of the groups of layers comprising a subset of the plurality of layers,
determining a pruning ratio for a group of layers based on the graph representations of the layers in the group, the pruning ratio indicating a percentage of filters to be pruned from the layers in the group,
pruning filters of the layers in the group based on the pruning ratio to generate compressed layers, and
updating the DNN by replacing the layers in the group with the compressed layers.

**13.** The apparatus of claim 12, wherein determining the pruning ratio for the group based on the graph representations of the layers in the group comprises:
inputting the graph representations of the layers in the group into a pre-trained graph representation neural network, the pre-trained graph representation neural network outputting the pruning ratio.

**14.** The apparatus of claim 13, wherein the operations further comprise:
further training the graph representation neural network by using the pruning ratio and the graph representations of the layers in the group as a new training sample.

**15.** The apparatus of any one of claims 12-14, wherein generating the sequence of graph representations comprises:
for each respective layer of the plurality of layers:

determining one or more attributes of the respective layer; and
generating a graph representation in the sequence based on the one or more attributes.

DNN
100

Input
Feature
Map
140

Weight Matrices
150

Output
Feature Map
160

Object
115

Object
125

Object
135

Input Image
105

Convolutional Layer 110

Pooling Layer 120

Fully Connected Layer 130

FIG. 1

Deep Learning Environment
200

Deep Learning Server
210

| DNN System 250 | Database 260 | Distributer 270 |

Network
240

Client Device
220

Client Device
220

Client Device
220

**FIG. 2**

EP 4 195 104 A1

DNN System
250

Interface Module
310

Training Module
320

Compression
Module
330

Validation Module
340

Application Module
350

Memory
360

FIG. 3

Compression Module
330

Graph Generation
Module
410

Graph Pooling
Module
420

Filter Pruning
Module
430

Graph Neural
Network (GNN)
440

DNN Updating
Module
450

GNN Training
Module
460

**FIG. 4**

DNN
510

$\Rightarrow$

Sequential Graph Representation
550

Layer 520

Activation 530

Layer 525

Activation 535

Layer 540

Layer 545

Node 560 — Node Features

Node 570 — Node Features

Node 565 — Node Features

Node 575 — Node Features

Node 580 — Node Features

Node 585 — Node Features

**FIG. 5**

FIG. 6

$w_i$

$F_{i,j}$

$n_i$

$n_{i+1}$

$X_i$

Sparse tensor
710

$X_{i+1}$

$n_{i+1}$

$n_{i+2}$

$X_{i+2}$

**FIG. 7**

Compressed DNN
800

Convolutional Layer 110

Pooling Layer 120

Fully Connected Layer 130

Compressed convolutional Layer 810

FIG. 8

900

Access a DNN that has been trained, the trained DNN comprising a plurality of layers
910

Generate a sequence of graphs based on attributes of the plurality of layers, each of the plurality of layers represented by a graph in the sequence
920

Cluster the plurality of layers into groups of layers based on the sequence of graphs, each of the groups of layers comprising a subset of the plurality of layers
930

Determine a pruning ratio for a group of layers based on the graphs of the layers in the group, the pruning ratio indicating a percentage of filters to be pruned from the layers in the group
940

Prune filters of the layers in the group based on the pruning ratio to generate compressed layers
950

Update the DNN by replacing the layers in the group with the compressed layers
960

**FIG. 9**

PROCESSING DEVICE
1000

| PROCESSING DEVICE<br>1002 | COMMUNICATION CHIP<br>1012 |
| MEMORY<br>1004 | BATTERY/POWER<br>1014 |
| DISPLAY DEVICE<br>1006 | GPS DEVICE<br>1016 |
| AUDIO OUTPUT DEVICE<br>1008 | AUDIO INPUT DEVICE<br>1018 |
| OTHER OUTPUT DEVICE<br>1010 | OTHER INPUT DEVICE<br>1020 |

ANTENNA

1022

FIG. 10

Europäisches
Patentamt

European
Patent Office

Office européen
des brevets

# EUROPEAN SEARCH REPORT

Application Number

EP 22 20 4895

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JINGFEI CHANG ET AL: "ACP: Automatic Channel Pruning via Clustering and Swarm Intelligence Optimization for CNN", ARXIV.ORG, CORNELL UNIVERSITY LIBRARY, 201 OLIN LIBRARY CORNELL UNIVERSITY ITHACA, NY 14853, 16 January 2021 (2021-01-16), XP081861101, * page 2 – page 3; figure 1 * | 1-15 | INV. G06N3/0464 G06N3/082 G06N3/084 G06N3/045 |
| A | SIXING YU ET AL: "GNN-RL Compression: Topology-Aware Network Pruning using Multi-stage Graph Embedding and Reinforcement Learning", ARXIV.ORG, CORNELL UNIVERSITY LIBRARY, 201 OLIN LIBRARY CORNELL UNIVERSITY ITHACA, NY 14853, 5 February 2021 (2021-02-05), XP081875969, * pages 1,6 * | 1-15 | |

TECHNICAL FIELDS
SEARCHED      (IPC)

G06N

The present search report has been drawn up for all claims

| Place of search | Date of completion of the search | Examiner |
|---|---|---|
| The Hague | 29 March 2023 | Falco, Gabriele |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
   .....................................................................................
& : member of the same patent family, corresponding
   document

EPO FORM 1503 03.82 (P04C01)

2